(19) Europäisches Patentamt
European Patent Office
Office européen des brevets

(11) EP 0 869 623 A2

(12) **EUROPEAN PATENT APPLICATION**

(43) Date of publication:
07.10.1998 Bulletin 1998/41

(51) Int. Cl.$^6$: **H04B 1/707**, H04L 1/00

(21) Application number: 98300925.9

(22) Date of filing: 09.02.1998

(84) Designated Contracting States:
AT BE CH DE DK ES FI FR GB GR IE IT LI LU MC NL PT SE
Designated Extension States:
AL LT LV MK RO SI

(30) Priority: 03.04.1997 US 832548

(71) Applicant: AT&T Corp.
New York, NY 10013-2412 (US)

(72) Inventor:
Gerakoulis, Diakoumis Parissis
Dover, New Jersey 07801 (US)

(74) Representative:
Asquith, Julian Peter et al
Marks & Clerk,
4220 Nash Court,
Oxford Business Park South
Oxford OX4 2RU (GB)

(54) **Method and apparatus for spectrally efficient transmission of CDMA modulated signals**

(57) In a multi-point-to-point transmission system, a Reed Solomon encoded communication signal is Turbo or Trellis code modulated prior to an orthogonal spreading operation performed on the user signal spectrum and on multi signal beams. The resultant spread signal is transmitted as beams at RF.

## FIG. 1

$R$ (kb/s) — $R_b$ (kb/s) — $R_S$ (ks/s) — $R_{SS}$ (ks/s) — $R_C$ (Mc/s)

ADD CRC AND FRAME TAIL BITS (101) (103) → RS (x, y) (105) → TCM RATE $k/n$ (107) → SPREADER (109) → M-PSK (111) → RF (113)

EP 0 869 623 A2

## Description

### Field Of The Invention

This invention relates to a CDMA (Code Division Multiple Access) signal transmission system and in particular to improving the spectral efficiency of CDMA signal transmissions. It is additionally concerned with a wireless transmission system to be used with multiple beams or multiple sector antennas in which interference between signals is to be expected. It is further directed to transmission between fixed station/service applications and to the common air interface which is a transmission media for signals generated by the spectral efficient signal processing.

### Background Of The Invention

CDMA is a modulation process in which a plurality of traffic channels are defined by spreading codes applied to each individual transmitted signal and then transmitting all the signals at a common wide-band frequency. This mode of transmission lacks spectral efficiency in the sense that if the spreading codes interfere with one another the number of effective traffic channels within a certain bandwidth is limited. To accommodate a large number of channels requires differing RF carriers for different users and multi-user bands.

Bandwidth is a limited quantity. Given limited available bandwidth space in the available spectrum it is imperative to improve the spectral efficiency of CDMA transmissions to meet increasing traffic demands. Interference between signals is particularly a problem in multiple beam systems and where sectorized antennas are used.

### Brief Summary Of The Invention

Therefore a CDMA signal wireless transmission communications system, with improved spectral efficiency, is provided as recited in the appended claims. This wireless system uses a free space common air interface. In particular bandwidth efficiency is enhanced by spreading and overspreading in combination with forward error correction coding and M-ary modulation which enhances separation between user signals and between multi-user beams.

In a particular illustrative example of a multi-point-to-point and point-to-multi-point transmission system, a Reed Solomon encoded communication signal is convolution code modulated combined with interleaving and then spread and overspread by orthogonal codes over the available bandwidth. The resultant spread signal is M-PSK modulated and transmitted at RF in CDMA format. In one example modulation coding is embodied as a parallel concatenated coding schema such as a convolutional Turbo code. In another example Trellis Code Modulation is applied to Reed Solomon encoded signals.

Specifically the illustrative examples are defined by the signal processing and in particular by Turbo, TCM and PSK rates which achieve the desired spectral efficiency.

### Brief Description Of The Drawing

FIG. 1 is a schematic of a spectrally efficient CDMA transmission system using Trellis code modulation;

FIG. 2 is a schematic of a Trellis code modulator (Rate 2/3) and a Reed-Solomon encoder which may be used in the system of FIG. 1;

FIG. 3 is a schematic of another Trellis code modulator (Rate 3/4) and a Reed-Solomon encoder which may be used in the system of FIG. 1;

FIG. 4 is a schematic of spreading and modulation circuitry which may be used in the system of FIG. 1 or FIG. 15;

FIG. 5 is a schematic of spreading circuitry for a fully-orthogonal, or mostly orthogonal system which may be used in the spreading and modulation circuitry of FIG. 4;

FIG. 6 is a schematic of spreading circuitry for a semi-orthogonal system which may be used in the spreading and modulation circuitry of FIG. 4;

FIG. 7 is a graph illustrative of spreading symbols and chipping rates for a fully orthogonal CDMA;

FIG. 8 is a schematic of geographical layout (i.e. continental U.S.) for four code orthogonal beam code reuse;

FIG. 9 is a graph of an illustrative orthogonal sequence with length 60 (partially illustrated);

FIG. 10 is a graph of an illustrative baseband filter characteristic for a CDMA channel;

FIG. 11 is a schematic of a demodulation unit used as a traffic channel receiver unit;

FIG. 12 is a schematic of a PN, $W_i$ and $W_k$ code despreader for a fully or mostly orthogonal CDMA system;

FIG. 13 is a schematic of a PN, $W_i$ and $W_k$ code despreader for a semi orthogonal CDMA system;

FIG. 14 is a schematic of a TCRU channel decoder;

FIG. 15 is a schematic of spectrally efficient channel transmitter using Turbo-code modulation;

FIG. 16 is a block diagram of the Turbo-code modulator;

FIG 17 is a graph illustrative of spreading symbols and chipping rates for mostly orthogonal (MO) CDMA;

FIG. 18 is a schematic of a geographical layout (i.e. continental U.S.) for two code orthogonal beam code reuse;

FIG. 19 is a functional block schematic of a phase estimator; and

FIG. 20 is a schematic of a wireless communication system, between a terrestrial station(s) and a satellite station, embodying the principles of the invention.

## Detailed Description

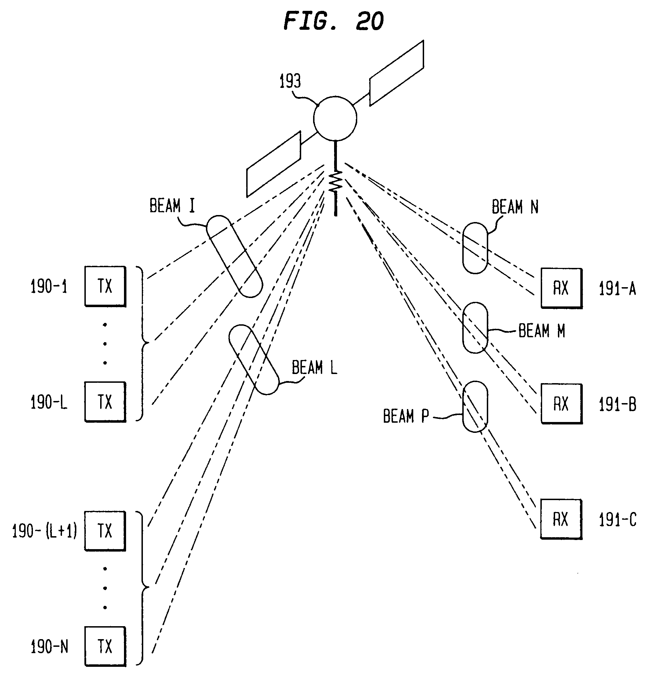

A typical wireless communication system to which the principles of the invention may be advantageously applied, as shown in the FIG.20, includes a plurality of terrestrial transmission stations 190-1, 190-L, 190-L+1, and 190-N. These stations each generate signal transmissions which are to be beamed to a satellite switch 193. By techniques known in the art the user signals 194 transmitted by terrestrial stations 190-1 to 190-L are combined into a multi-signal beam 1 which includes all the signals from these stations. Beams may be created by spreading a plurality of user signals as shown in the spreading processes below. Similarly the signals 195 transmitted from terrestrial stations 190-L+1 to 190-N are combined into a second beam 2.

Beams 1 and 2 are received at the satellite which recovers the individual signals from the beams 1 and 2 and proceeds to switch the the individual signals to combine them into beams for transmission to the terrestrial receiving stations 191. The switching of the satellite combines the received signals into outgoing beams, where the beam has a common destination with the destination of its included user signals. Signals intended for the receiving terrestrial station 191-A are switched to be combined into the beam N. Signals intended for the receiving station 191 B are combined in to beam M. Signals directed to station 191-C are combined into the beam P.

It is desirable in such a system to isolate user signals from one another and to further isolate the multi-signal beams from one another. This is achieved in the illustrative embodiment by a process of spreading and over spreading both the beams and the individual user signals they contain with orthogonal and other codes as needed to prevent intersignal and interbeam interference.

Encoding of traffic channels for transmission, illustratively, from a ground station to a satellite and vice versa is optimized for spectral efficiency, especially in minimizing inter CDMA encoded channel and beam interference. The transmission scheme envisions an optimizing concatenation of error correcting codes and the use of a bandwidth efficient modulation scheme. In a first illustrative embodiment the concatenation of codes is by co-operative use of an outer Reed-Solomon RS(x,y) code and an inner Turbo-coder. These concatenated codes are spread and modulated using an M-ary Phase Shift Keying (M-PSK). The first spreading orthogonal code spans the length of the M-ary symbol at the spreader input. This spectrally efficient processing is implemented, depending upon spectrum crowding with fully orthogonal, mostly orthogonal and semi-orthogonal modes in the spreading process of beams. The beams each include a plurality of user signals or traffic channels. Fully orthogonal coding is used for all traffic channels contained within the beams. Pseudo random (PM) and fully orthogonal (FO) codes are used for beam encoding. Mostly Orthogonal (MO) is used where only first tier (i.e.,top ranking:including all the channels) beams must exhibit orthogonality.

A fully orthogonal code (FO) is one that is substantially isolated (i.e.,non-correlative) from other fully orthogonal codes in the system and is used herein to separate beams orthogonally. FO herein also includes the case wherein all intra beam users are also orthogonally isolated. In some applications beams may be orthogonally isolated in clusters of four beams.

A mostly orthogonal code (MO) is less isolated from other codes and mostly totally separates a first tier of orthogonal beams from non-interference with secondary tiers. In the MO mode herein only two beams pairs are orthogonally isolated from one another.

A semi orthogonal code (SO) is a coding arrangement wherein all beams (each including orthogonal traffic channels) are separated by non-orthogonal PN codes. User channels within the beams may if needed be orthogonally isolated.

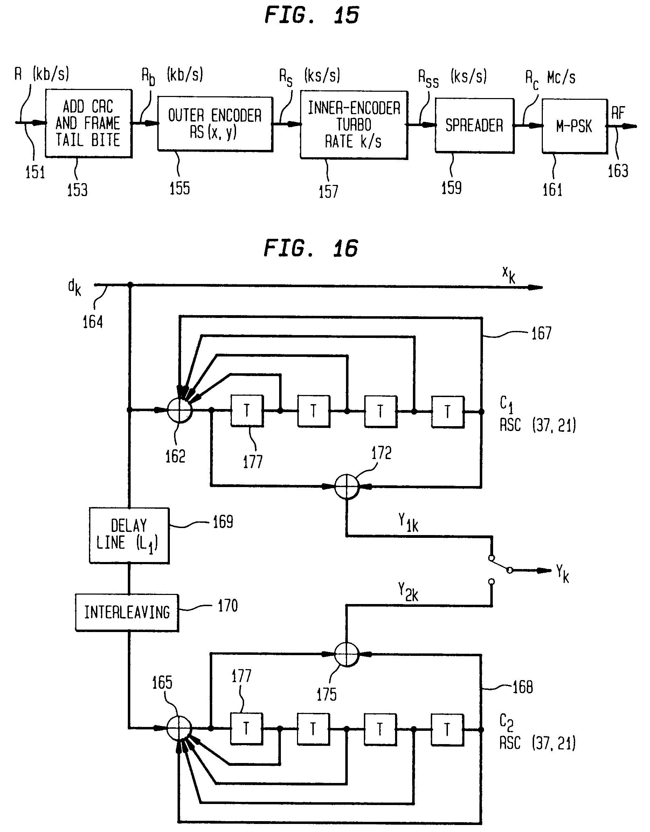

A spectrally efficient traffic channel transmitter unit shown in block form in FIG. 15 includes an input lead 151 which receives an R(Kb/s) voice and data channel input signal on input lead 151. This signal is subjected to a cyclic redundancy check and framed in the framing unit 153 to form a framed signal $R_b$(kb/s). An outer encoder 155 performs Reed Solomon encoding of the framed signal input. In the illustrative embodiment a frame length of 480 bits is contemplated.

The coded signal $R_s$(ks/s), output of encoder 155, is applied to the inner Turbo encoder 157 which has rate k/n (e.g., 1/2 in the illustrative embodiment). The term TURBO herein refers to a parallel or serially concatenated codes linked by an interleaver. In a specific embodiment such codes may be a parallel concatenation of two recursive systematic convolutional L(R SC) codes of Block codes linked by an interleaver. It may also be a serial concatenation of convolutional codes linked by an interleaver. The input bits to the first Turbo included internal encoder are scrambled by the interleaver before entering the second Turbo included internal encoder. The codeword of the parallel concatenated codes consists of the input bits followed by the parity check bits of both encoders. Herein the Turbo encoder 157 has rate 1/2 implemented with two RSC codes. The associated internal decoder, using a feedback decoding rule, is implemented as P pipelined identical elementary decoders. The illustrative Turbo code rates for FO-1, MO-1 and SO-1 are 2/3, 1/2 and 1/3 respectively. The concatenation of Reed-Solomon and Turbo codes is optimized to provide a very low BER (Bit Error Rate) required for better service quality. Turbo Coders are discussed in " Near SHANNON Limit Error-Correcting Coding and Decoding: Turbo Codes" by C. Berrou et al in ICC'93 Geneva pg. 1064-1070.

The Turbo coder output $R_{ss}$(ks/s) generates n (parallel) symbols which are spread to $R_c$Mc/s and mapped in the M-ary PSK signal set $M = 2^n$. Mapping for 8-PSK is used for FO and QPSK for MO and SO.

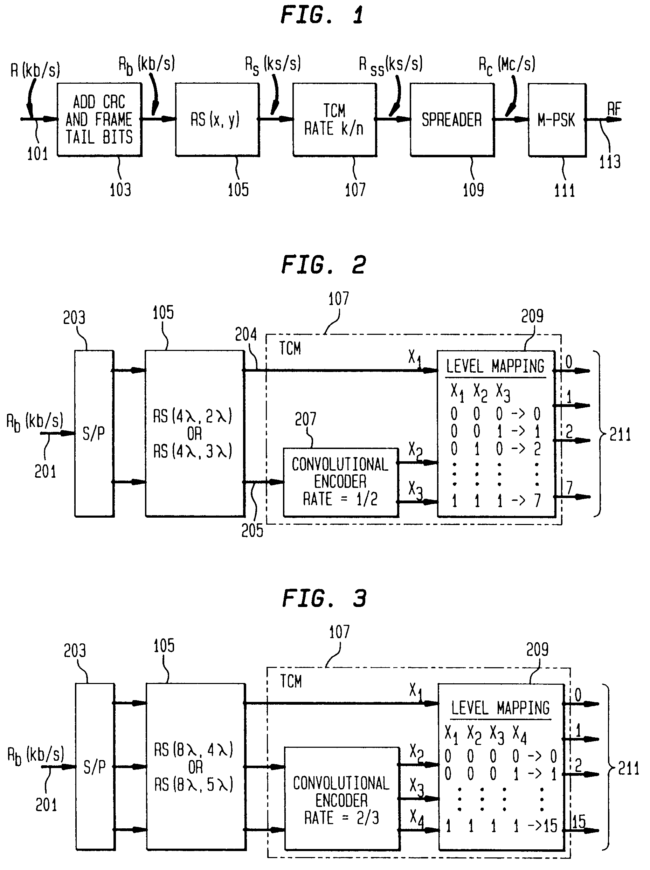

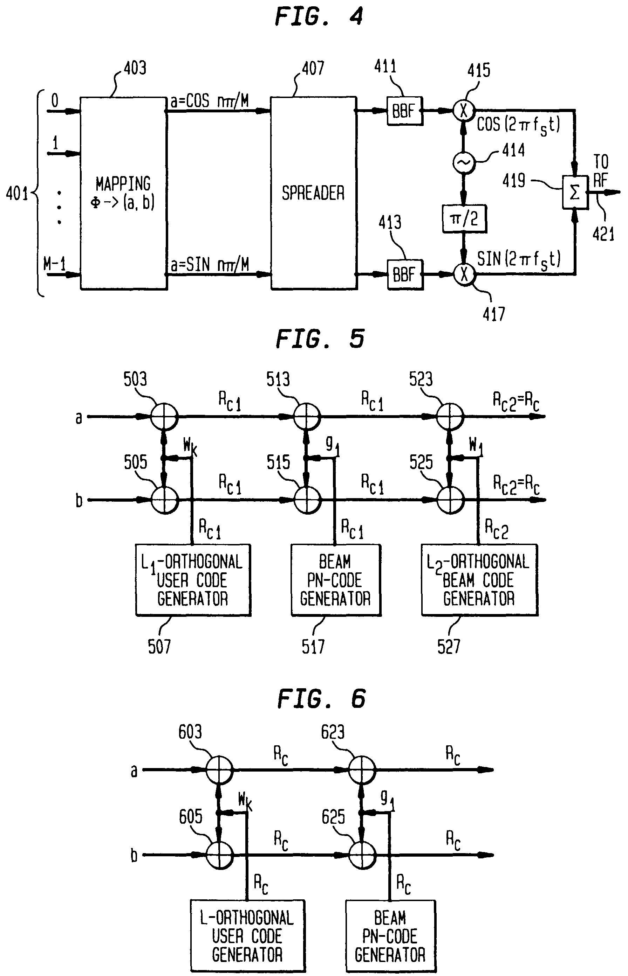

The Turbo-Code modulated signal is applied to the spreader 159 which spreads the signal over a bandwidth of W = 10 MHz. A spreading operation/circuit for FO and MO is shown in the spreader of FIG. 5 and spreading for SO is shown in the spreader circuit of FIG. 6. These two spreaders are discussed herein below as applied to the modulation and coding systems of both FIG. 1 and FIG. 15. The spreading operation is followed by the M-ary modulator 161 from which the output signal for transmission is obtained on lead 163. In the illustrative terrestrial-satellite communication embodiment the Turbo encoder may be used both uplink and downlink connections.

A block diagram of an illustrative Turbo encoder with a rate of 1/2 is shown in the FIG. 16. This particular Turbo Coder embodiment is shown in the fig. 2 of the above cited paper by Berrou et al. The encoder is implemented with two identical RSC codes (37,21). Input is from lead 164 and is input to two exclusive OR gates 162 and 165. The input to the first inner coder 167 is, via gate 162, and input to the outer coder 168 is via delay line 169 and interleaver 170. The RSC codes are recursive systematic convolutional codes linked by the interleaver 170. The interleaver is positioned so that the input to coder 167 is scrambled before entering coder 168. The coded output is obtained from the output exclusive OR gates 172 and 175. Feedback from the individual Turbo code units 177 to the exclusive OR gates 162, 165 allows for parity checking of both encoders. A fuller description may be obtained from the Berrou et al paper cited above.

Another spectrally efficient CDMA (code division multiple access) transmission connection to directly couple two terminal units or stations is shown in the FIG. 1. The connection conveyance may be an uplink or downlink connection between a switch (i.e., a satellite) and a terrestrial subscriber station for example. Its processing procedures are based essentially on a spectrally efficient transmission scheme involving TCM (Trellis Code Modulation) combined with orthogonal spreading codes of a length to span the length of a symbol generated by a Trellis code with a rate k/n (transmitting k bits per coded symbol). In the illustrated connection a plurality of traffic channels are contained within a CDMA channel having a wide bandwidth (e.g., 10 MHz). Processing is considered to be digital in the illustrative embodiment. This connection may be implemented in both fully orthogonal (FO) and semi- orthogonal (SO) modes. The FO mode provides the best BER (bit error rate) while the SO mode is more efficient if interbeam interference is minimal.

The connection components include an input lead 101 for receiving a transmission signal rate R(kb/s) (kilobits/sec) which is subjected to a cyclic redundancy check and framed in the framing unit 103 to from the framed signal transmission bit rate $R_b$(kb/s). The frame includes a 16 bit CRC and frame tail bits. A Reed-Solomon encoder 105 RS (x,y) operates on the framed signal bit rate $R_b$(kb/s) to provide additional bit error protection and supplies the output symbols signal rate $R_s$(ks/s) (kilosymbols/sec). Output symbol rate $R_s$(ks/s) comprising symbols is applied to a Trellis Code Modulator 107 which modulates the symbols into M-ary symbols at the encoded symbol rate $R_{ss}$(ks/s) at a rate of k/n (symbols/sec). In the illustrative embodiment M is 8 or 16 symbols. The M-ary signals are identified the Cosine and Sine coordinates (a,b) using the mapping I (a,b).

A spreader 109 spreads and over spreads the TCM modulated signal over a bandwidth which in the illustrative embodiment is 10 MHz. The spread signal is modulated by phase shift keying in modulator 111 which supplies the output RF on lead 113.

A Trellis encoder and Reed-Solomon encoder unit, as shown in FIG. 2 has a framed packet signal applied to the input lead 201. Input lead 201 is connected as input to the Trellis encoder at a TCM rate of 2/3 in the illustrative embodiment of FIG. 2.

A serial-to-parallel converter 203 converts the serial frame output of framing unit 103 into a parallel output applied to the Reed Solomon encoder 105 which as shown is adapted for interleaved codes RS (8, 4) and RS (8, 5), for $\phi = 2$, 4. Its output is on parallel leads 204 and 205. Lead 205 connects the frames to a convolutional encoder 207 which encodes at the rate 1/2. The frame is directly connected, on lead 204 to a level mapping circuit 209 as is the output of the convolutional encoder 207. The level mapping unit accepts inputs $X_1$, $X_2$ and $X_3$ and outputs the Trellis M-ary signal amplitudes (0-7) on eight parallel output leads 211.

An alternative TCM and Reed Solomon encoder,shown in FIG. 3, has 16 states or M-ary levels. Inputs $X_1$, $X_2$, $X_3$ and $X_4$ are output on the sixteen parallel output leads 311 (0-15)instead of the 8 output levels of the system of FIG. 2. A TCM rate of 3/4 is used in combination with the Reed Solomon encoder 105.

The spreading and modulation unit of FIG. 4 accepts the M-ary output of the either the Turbo Code modulator of FIG. 15 or the Trellis Code Modulator of either FIG. 2 or 3 on it $R_s$M input leads 401. The M-ary symbols (0 to M-1) on input leads 401 are mapped onto the sine and cosine components (a,b), using the mapping I (a,b) supplied by the mapping processor 403. The cosine n $\pi$ /M signal on lead 404 and the sin n $\pi$ /M signal on lead 405 are both applied to the spreader 407 wherein the sine and cosine components are spread by the same code. Spreading may be either fully orthogonal (FO), mostly orthogonal (MO) or semi orthogonal (SO). The chipping rates of these codes are shown in the following tables for FO, MO and SO. In either case the spread terms are applied to baseband filters 411 and 413 for providing a band limited CDMA channel of 10 Mhz. A sinusoidal modulating source 414 is applied to mixer 415 and is phase shifted by 90 degree phase shifter 416 for application to mixer 417. The two signals are summed in summer 419 and applied to the RF output lead 421.

Typical parameter values for both FO, MO and SO chipping rates are shown in the following tables:

| Implementation FO-1: TCM Rate 3/4, 16 PSK, RS (32,16) | | | | | | | | |
|---|---|---|---|---|---|---|---|---|
| Channel Type | R (k/bs) | Rb (kb/s) | Rs (ks/s) | Rss (ks/s) | Rc1 (Mc/s) | RC=Rc2(Mc/s) | Rc1/Rss | Rc2/Rc1 |
| I | 64 | 76.8 | 25.6 | 51.2 | 2.4576 | 9.8304 | 48 | 4 |
| II | 32 | 38.4 | 12.8 | 25.6 | 2.4576 | 9.8304 | 96 | 4 |
| III | 16 | 19.2 | 6.4 | 12.8 | 2.4576 | 9.8304 | 192 | 4 |
| 2B+D | 144 | 153.6 | 51.2 | 102.4 | 2.4576 | 9.8304 | 24 | 4 |
| T1 | 1544 | 1843.2 | 614.4 | 1228.8 | 2.4576 | 9.8304 | 2 | 4 |

| Implementation SO-1: TCM Rate 2/3, 8-PSK, RS (32,16) | | | | | | |
|---|---|---|---|---|---|---|
| Channel Type | T (kb/s) | Rb (kb/s) | Rs (ks/s) | Rss (ks/s) | Rc (Mc/s) | Rc/Rss |
| I | 64 | 76.8 | 38.4 | 76.8 | 9.8304 | 128 |
| II | 32 | 38.4 | 19.2 | 38.4 | 9.8304 | 256 |
| III | 16 | 19.2 | 9.6 | 19.2 | 9.8304 | 512 |
| 2B+D | 144 | 153.6 | 76.8 | 153.6 | 9.8304 | 64 |
| T1 | 1544 | 1638.4 | 819.2 | 1638.4 | 9.3804 | 6 |

| Turbo Code Modulation | | | | |
|---|---|---|---|---|
| Implementation | Outer Encoder | Inner Encoder | Modulation | Orthogonal Bean Reuse |
| Fully-Orthogonal FO-1 | RS($16\lambda, 15\lambda$) | TURBO rate 2/3 | 8-PSK | 1/4 |
| Mostly-Orthogonal MO-1 | RS($16\lambda, 15\lambda$) | TURBO rate 1/2 | QPSK | 1/2 |
| Semi-Orthogonal SO-1 | RS($16\lambda, 15\lambda$) | TURBO rate 1/3 | QPSK | 1 |

SE-CDMA Implementation Alternatives

| Turbo Code Modulation | | | | | | |
|---|---|---|---|---|---|---|
| SE-CDMA FO-1: (RS($16\lambda, 15\lambda$), Turbo Rate 2/3, 8-PSK | | | | | | |
| Channel Type | I | II | III | IV | V | VI | VII |
| R (kb/s) | 64 | 32 | 16 | 144 | 384 | 1544 | 2048 |
| $R_b$ (kb/s) | 76.8 | 38.4 | 19.2 | 153.6 | 460.8* | 2304* | 2304 |
| $R_s$ (kb/s) | 81.92 | 40.96 | 20.48 | 163.84 | 491.52 | 2457.6 | 2457.6 |
| $R_{ss}$ (kb/s) | 40.69 | 20.48 | 10.24 | 81.92 | 245.76 | 1228.8 | 1228.8 |
| $R_{c1}$ (Mc/s) | 2.4576 | 2.4576 | 2.4576 | 2.4576 | 2.4576 | 2.4576 | 2.4576 |
| $R_c = R_{c2}$ (Mc/s) | 9.8304 | 9.8304 | 9.8304 | 9.8304 | 9.8304 | 9.8304 | 9.8304 |
| $R_{c1}/R_{ss}$ | 60 | 120 | 240 | 30 | 10 | 2 | 2 |
| $R_{c1}/R_{c2}$ | 4 | 4 | 4 | 4 | 4 | 4 | 4 |

* Also includes multiplexing with other channel types.

System Parameters of the SE-CDMA with
Fully-Orthogonal Implementation (FO-1)

| Turbo Code Modulation | | | | | | | |
|---|---|---|---|---|---|---|---|
| SE-CDMA MO-1: $RS(16\lambda, 15\lambda)$, Turbo Rate 1/2, QPSK | | | | | | | |
| Channel Type | I | II | III | IV | V | VI | VII |
| R (kb/s) | 64 | 32 | 16 | 144 | 384 | 1544 | 2048 |
| $R_b$ (kb/s) | 76.8 | 38.4 | 19.2 | 153.6 | 460.8* | 2304* | 2304 |
| $R_s$ (kb/s) | 81.92 | 40.96 | 20.48 | 163.84 | 491.52 | 2457.6 | 2457.6 |
| $R_{ss}$ (kb/s) | 81.92 | 40.96 | 20.48 | 163.84 | 491.52 | 2457.6 | 2457.6 |
| $R_{c1}$ (Mc/s) | 4.9152 | 4.9152 | 4.9152 | 4.9152 | 4.9152 | 4.9152 | 4.9152 |
| $R_c = R_{c2}$ (Mc/s) | 9.8304 | 9.8304 | 9.8304 | 9.8304 | 9.8304 | 9.8304 | 9.8304 |
| $R_{c1}/R_{ss}$ | 60 | 120 | 240 | 30 | 10 | 2 | 2 |
| $R_{c2}/R_{c1}$ | 2 | 2 | 2 | 2 | 2 | 2 | 2 |

* Also includes multiplexing with other channel types.

System Parameters of the SE-CDMA with

Mostly-Orthogonal Implementation (MO-1)

| Turbo Code Modulation | | | | | | | |
|---|---|---|---|---|---|---|---|
| SE-CDMA SO-1: $RS(16\lambda, 15\lambda)$, Turbo Rate 1/3, QPSK | | | | | | | |
| Channel Type | I | II | III | IV | V | VI | VII |
| R (kb/s) | 64 | 32 | 16 | 144 | 384 | 1544 | 2048 |
| $R_b$ (kb/s) | 76.8 | 38.4 | 19.2 | 153.6 | 409.6* | 2048* | 3072* |
| $R_{ss}$ (kb/s) | 122.8 | 61.49 | 30.72 | 245.76 | 655.36 | 3276.8 | 4915.2 |
| $R_c$ (Mc/s) | 9.8304 | 9.8304 | 9.8304 | 9.8304 | 9.8304 | 9.8304 | 9.8304 |
| $R_c/R_{ss}$ | 80 | 160 | 320 | 40 | 15 | 3 | 2 |

* Also includes multiplexing with other channel types.

System Parameters of the SE-CDMA with

Semi-Orthogonal Implementation (SO-1)

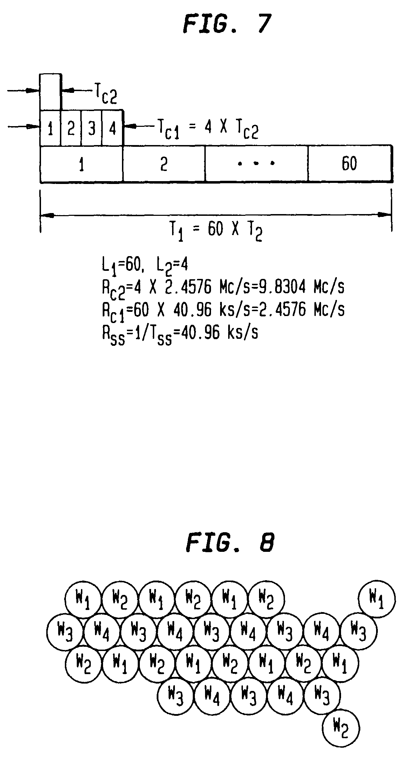

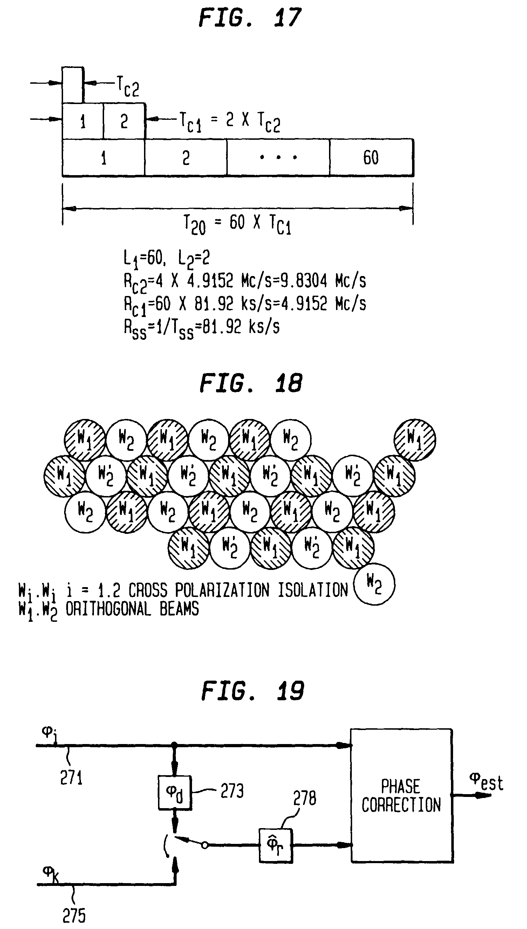

FO and MO, and SO spreading, to encode user signals and to encode beams, are performed in the spreaders of FIGs. 5 and 6 respectively. For example using FO spreading and over spreading there are 60 orthogonal codes for user traffic spreading at the rate $R_{c1} = 2.4576$ Mc/s. Over spreading by a factor of 4 raises the chip rate to 9.8304 Mc/s. The over spreading step provides 4 orthogonal codes for separating the signal beams into the code steps of Fig. 7. One example of a reuse pattern for these 4 orthogonal signal beam codes is shown in the FIG. 8 which shows an illustrative distribution of 30 beams (with a 5dB beam width of 0.78) within the U. S. Another example of reuse patterns for two orthogonal signal beam codes is shown in the FIG. 18 which shows as illustrative distribution of 30 beams (with a 5dB width of 0.78) within the U. S for the code steps shown in Fig. 17.

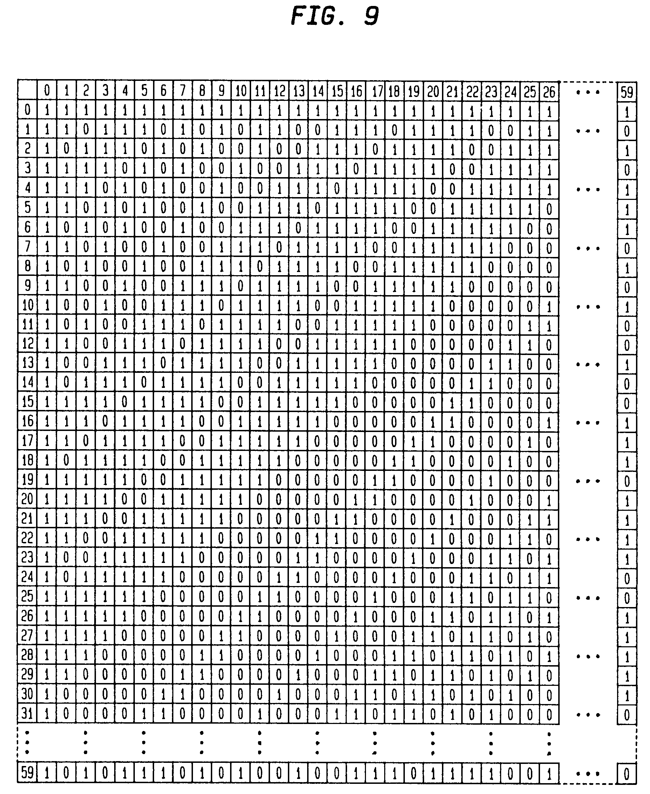

A SO mode is used for beams when interbeam interference is low or absent. With use of the SO mode the orthogonal beam code is not used and the rate $R_{c1} = R_c$. Orthogonal codes are generated using Hadamard-Walsh functions if the required length L is a power of 2 ($L = 2^k$). If L is not a power of 2 the method of quadric residues is used. FIG. 9 shows a set of 60 orthogonal codes generated by the quadratic residue method.

A schematic of the FO and/or MO spreading operation is shown in the FIG. 5. Initially the a and b user signals are applied to the exclusive OR gates 503 and 505 respectively where they are excited by an $L_1$ orthogonal code of rate $R_{c1}$ generated by code generator 507 in order to orthogonally separate user channels within each CDMA beam. The gated outputs at rate $R_{c1}$ are applied in parallel to the exclusive OR gates 513 and 515 where each gate is excited by a beam PN code $g_i$ of rate $R_{c1}$ provided by code generator 517 to create and spread the beam. The outputs, at rate $R_{c1}$, of exclusive OR gates 513 and 515 are transmitted in parallel to the exclusive OR gates 523 and 525 which are excited by the $L_2$ orthogonal beam code at rate $R_{c2}$ as supplied by code generator 527 to orthogonally separate the CDMA beams. The resultant output on leads 511 and 512 is at rate $R_{c2} = R_c$.

The chart of FIG. 7 illustrates the relation between the symbol length $T_{ss}$, the spreading chip length $T_{c1}$ ($T_{ss} = 60\, T_{c1}$) and the overall spreading chip length $T_{c2}$ ($T_{c1} = 4\, T_{c2}$) of a fully orthogonal (FO) coded symbol.

The chart of FIG. 17 shows relations between symbol length $T_{ss}$, the spreading chip $T_{c1}$ ($T_{ss} = 60 T_{c1}$) and the overall spreading chip length $T_{c2}$ ($T_{c1} = 2 T_{c2}$) of mostly orthogonal (MO) coding.

FIG. 6 discloses the SO spreading operation. Operation is the same as that of FIG. 5 except that the application of the $L_2$ orthogonal beam code $R_{c2}$ is omitted and the spreading rate is $R_c$ of both PN and orthogonal codes. L-orthogonal codes, applied to exclusive OR gates 603 and 605, identify the user channels and PN codes, applied to exclusive OR gates 623 and 625, identify the beam.

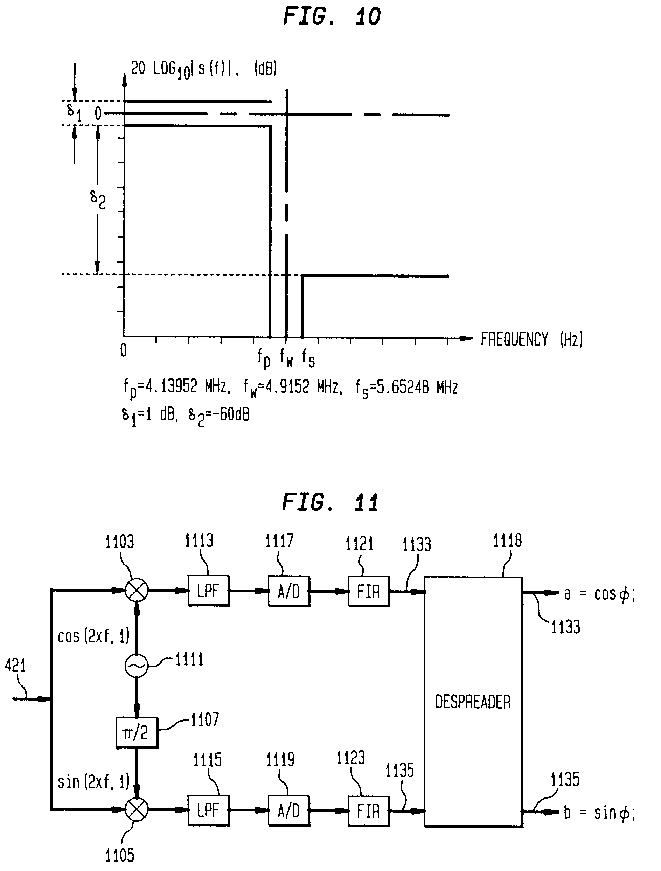

Following the spreading operation of the spreaders of either FIGs. 5 or 6, the $R_c$ data is transmitted through the base band filters 411 and 412 shown in FIG. 4. These base band filters are implemented as Raised Cosine filters. The characteristics of these base band filters are shown in FIG. 10 and indeed provide a roll off characteristic having a factor of 0.15 as shown in the illustrated graph.

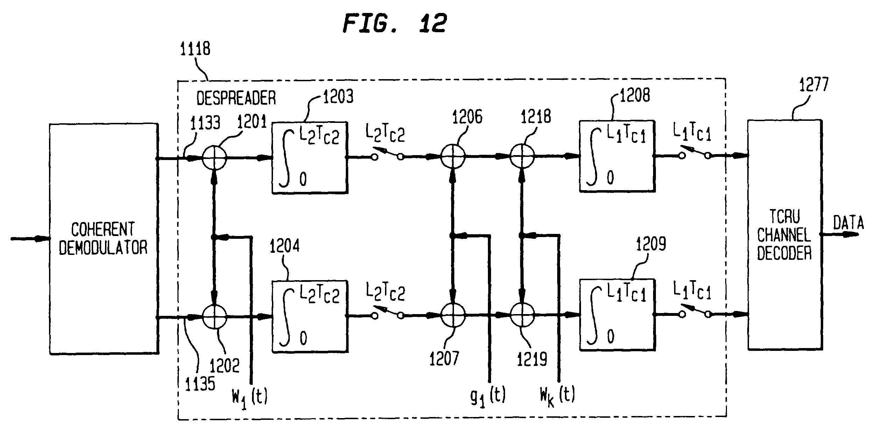

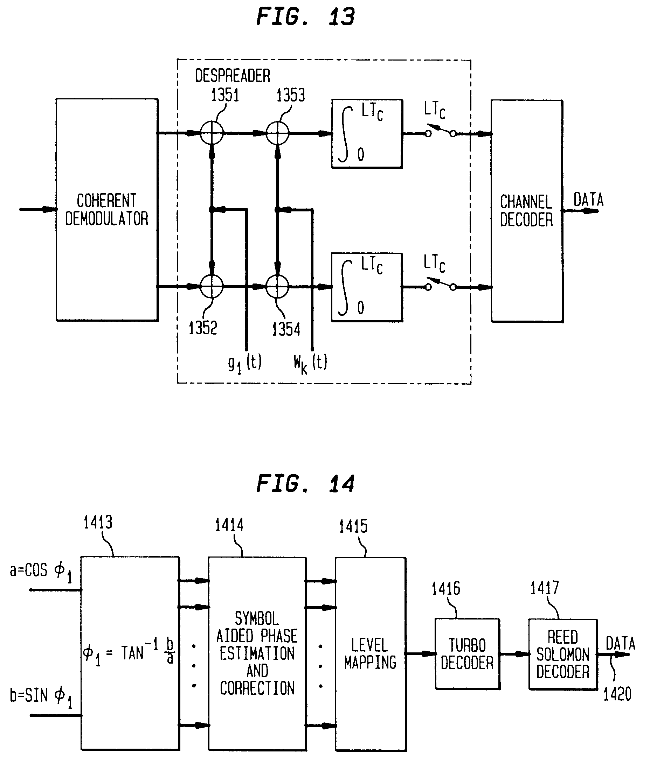

In the spreading and modulation circuit of FIG. 4 outputs of both mixers 415 and 417 are combined in summer 419 and applied to output lead 421 for application to the traffic channel receiver circuitry whose various components are shown in FIGs. 11, 12, 13 and 14 and in which FIGs 12 and 13 show the overall receiver connection for both FO and SO. despreader operations.

A coherent demodulation circuit of FIG. 11 applies the incoming signals on lead 421 to the two exclusive OR gates 1103 and 1105. Sinusoidal source 1111 excites exclusive OR gate 1103 with a cosine function and via phase shifter 1107 excites exclusive OR gate 1105 with a sin function. The OR gate outputs are applied to low pass filters 1113 and 1115, and analog to digital converters 1117 and 1119, to FIR circuits 1121 and 1123 which are in turn connected to the despreader 1118, via leads 1133 and 1135. Despreaders are shown shown in FIGs. 12[FO/MO] or 13[SO].

In a fully orthogonal (FO) or mostly orthogonal (MO) despreader shown in FIG. 12 leads 1133 and 1135 connect to the despreader exclusive OR gates 1201 and 1202. The input is initially despread with an orthogonal code $W_i$ (t) (e.g., Walsh code) in exclusive OR gates 1201 and 1202. The OR gate outputs are integrated in integrators 1203 and 1204, respectively, for the length of $L_2\, T_{c2}$ the length of integration, being transmitted forward, and being controlled by the time of closure of the switches 1215 and 1216. This length integrate code is applied to exclusive OR gates be deover spread by a PN code $g_i$ (t) specifically in the exclusive OR gates 1206 and 1207 followed by a despreading by an orthogonal code $W_k(t)$ (e.g., Walsh code) in exclusive OR gates 1218 and 1219. The two resulting outputs are applied through integrators 1208 and 1209 which integrate for the full length of the code $L_2\, T_{c2}$. The integration output or summed results are applied to the TCRU (Traffic Channel Receiver Unit) channel decoder 1277, shown schematically in FIG. 14 and discussed below.

A semi-orthogonal (SO) despreader shown in FIG. 13 utilizes the channel PN code $g_i(t)$, applied to exclusive OR gates 1351 and 1352, and the orthogonal beam code $w_k$ (t) (e.g., Walsh code), applied to exclusive OR gates 1353 and 1354. The despread signals and beams are integrated in LTC integrators 1356 and 1357. Semi orthogonal spreading may be used where the fully orthogonal spreading is not needed because the band or sector of interest is less crowded.

The TCRU channel decoder, of FIG. 14, maps the Cosine and Sine signal inputs in the $\phi = \arctan b/a$ mapping unit 1413. Phase estimations are determined in the phase estimation circuit 1414 ( see FIG. 19) and symbols related to the phase are generated. These symbols are applied to the level mapping unit 1415 and then to a TCM or Turbo decoder 1416. These Symbols are Reed Solomon decoded in decoder 1417 to obtain the RF data signal on lead 1420 at the receiver.

A symbol aided coherent demodulation may also be utilized within the system. Such a system is dependent upon phase estimation at a receiver. A receiver system such as shown in the FIG. 19 may be implemented by symbol aided coherent demodulation may also be utilized within the system. Such a system is dependent upon phase estimation at a receiver. Symbols of known phase are inserted known positions of transmitted frames. The symbol bit rate is 4% or less of the total transmitted bit rate. These symbols arte extracted at the receiver in order to provide the phase estimation for demodulating the information symbols, as shown in FIG. 19.

A receiver system such as shown in the FIG. 19 may be implemented for coherent resolution of the received signal. A received data symbol phase $\phi_i$ is received at input lead 271 and applied to a phase correction circuit 272. The input symbol is also applied to a circuit 273 to generate phase correction information $\phi_d$ this phase correction information may be applied via two pole switch 277 to the phase estimator 278 which estimates by smoothing and interpolation to supply estimate phase correction information.

A reference phase symbol $\phi_k$ is applied to lead 275 and is selectively connected, via switch 277, to phase estimator 278. The output of circuit 273, as indicated, may also be connected to phase estimator 278. The output of phase estimator 278 is also applied to the phase correction circuit 272. The output of the phase correction circuit is the sum of the received data symbol, extracted phase information and phase estimates resulting in establishing the estimated phase of the received data symbol $\phi_{est}$.

## Claims

1. In a wireless transmission system having a plurality of terrestrial transceiver stations and a satellite in the sky transceiver station, signal processing apparatus for a multi-point-to-point communication system coupling the ground transceiver stations to the satellite transceiver station and in which pluralities of individual user signals are bundled into a lesser plurality of beams containing multiple user signals for enhancing spectral efficiency, comprising:

   each transceiver station including:
   radio transmission circuitry having:

   signal framing circuitry;
   Reed-Solomon encoding circuitry connected for encoding framed signals;
   convolutional concatenated modulating circuitry connected for modulating the Reed-Solomon encoded framed signals;
   circuitry joining user signals into beams having a plurality of user signals. including spreading circuitry for spreading and overspreading the modulated signals with first and second spreading codes for signal and beam respectively with at least one of the first and second codes being orthogonal for achieving maximum separation between the beams and signals;
   RF signal generation circuitry and associated radiation antennas connected for wireless transmission of the spread and over spread signals and beams into an air interface;

   radio reception circuitry having:

   demodulation circuitry for received RF signals
   de spreading and de over spreading circuitry for received demodulated signals;
   decoding and phase recovery circuitry for received de spread and de over spread signals;
   Reed-Solomon and Convolutional concatenated decoder circuitry for recovering information signals.

2. The wireless transmission system of claim 1, comprising:

   the convolutional concatenated coding circuitry comprises trellis code modulator circuitry joining user signals into beams having a plurality of user signals with a TCM rate of 3/4.

3. The wireless transmission system of claim 1, comprising:

   the convolutional concatenated coding circuitry comprises a trellis code modulator circuitry joining user signals into beams having a plurality of user signals with a TCM rate of 2/3.

4. The wireless transmission system of claim 1, comprising:

   the convolutional concatenated coding circuitry comprises a Turbo code modulator circuitry joining user signals into beams having a plurality of user signals with a Turbo rate of 2/3.

5. The wireless transmission system of claim 1, comprising:

    the convolutional concatenated coding circuitry comprises a Turbo code modulator circuitry joining user signals into beams having a plurality of user signals with a Turbo rate of 1/2.

6. The wireless transmission system of claim 1, comprising:

    the Reed-Solomon encoding circuitry connected for encoding framed signals having a coding rate of (32,16).

7. The wireless transmission system of claim 1, comprising:

    the Reed-Solomon encoding circuitry connected for encoding framed signals having a coding rate of $(16\lambda,15\lambda)$.

8. In a wireless transmission system coupling two communication stations, wireless transmission defined by a signal process method; comprising the steps of:

    modulating an encoded signal by a convolutional parallel concatenated coding scheme followed by interleaving;
    spreading and overspreading the modulated signal and combining signals into beams to generate a spread spectrum beam for wireless transmission.

9. In a wireless transmission system coupling two communication stations, as claimed in claim 8, further defined by the steps of:

    encoding a signal by Reed-Solomon coding prior to modulating.

10. In a wireless transmission system coupling two communication stations, as claimed in claim 8, further defined by the steps of:

    using orthogonal spreading codes for the spreading process.

11. In a wireless transmission system coupling two communication stations, as claimed in claim 8, further defined by the steps of:

    using orthogonal spreading codes for maintaining isolation of beams from interbeam interference.

12. In a wireless transmission system coupling two communication stations, as claimed in claim 8, further defined by the steps of:

    using orthogonal spreading codes for maintaining separation between user channels.

13. In a wireless transmission system coupling two communication stations, as claimed in claim 8, further defined by the steps of:

    Reed Solomon encoding of the signal;
    using semi-orthogonal spreading codes applied to beams.

14. In a wireless multi-point-to-point transmission system coupling two communication stations, defined by the signal process steps of:

    Turbo code modulating an encoded signal;
    spreading and overspreading the Turbo code modulated signal to generate a spread spectrum signal.

15. In a wireless multi-point-to-point transmission system coupling two communication stations, as claimed in claim 14, further defined by a beam signal sub-banded into user channels; further including the steps of:

    Reed Solomon encoding of the signal;

using orthogonal codes for the spreading process, with orthogonal spreading codes applied to beams to insulate beams from other beam interference and with orthogonal spreading codes applied to user channels to identify individual users.

**16.** In a wireless multi-point-to-point transmission system coupling two communication stations, as claimed in claim 14, including the step of:

transmitting signals as phase shift key signals.

## FIG. 1

R (kb/s) → [ADD CRC AND FRAME TAIL BITS] 101, 103 → $R_b$ (kb/s) → [RS (x, y)] 105 → $R_s$ (ks/s) → [TCM RATE k/n] 107 → $R_{ss}$ (ks/s) → [SPREADER] 109 → $R_c$ (Mc/s) → [M-PSK] 111 → RF 113

## FIG. 2

$R_b$ (kb/s) → [S/P] 201, 203 → [RS (4λ, 2λ) OR RS (4λ, 3λ)] 105 → 204 → TCM 107

$X_1$ → [LEVEL MAPPING] 209

[CONVOLUTIONAL ENCODER RATE = 1/2] 207, 205 → $X_2$, $X_3$

| $X_1$ | $X_2$ | $X_3$ | | |
|-------|-------|-------|----|----|
| 0 | 0 | 0 | -> | 0 |
| 0 | 0 | 1 | -> | 1 |
| 0 | 1 | 0 | -> | 2 |
| ⋮ | ⋮ | ⋮ | | ⋮ |
| 1 | 1 | 1 | -> | 7 |

0, 1, 2, ... 7 } 211

## FIG. 3

$R_b$ (kb/s) → [S/P] 201, 203 → [RS (8λ, 4λ) OR RS (8λ, 5λ)] 105 → TCM 107

$X_1$ → [LEVEL MAPPING] 209

[CONVOLUTIONAL ENCODER RATE = 2/3] → $X_2$, $X_3$, $X_4$

| $X_1$ | $X_2$ | $X_3$ | $X_4$ | | |
|-------|-------|-------|-------|----|----|
| 0 | 0 | 0 | 0 | -> | 0 |
| 0 | 0 | 0 | 1 | -> | 1 |
| ⋮ | ⋮ | ⋮ | ⋮ | | ⋮ |
| 1 | 1 | 1 | 1 | -> | 15 |

0, 1, 2, ... 15 } 211

## FIG. 4

## FIG. 5

## FIG. 6

## FIG. 7

$T_1 = 60 \times T_2$

$L_1 = 60, \; L_2 = 4$
$R_{c2} = 4 \times 2.4576 \; Mc/s = 9.8304 \; Mc/s$
$R_{c1} = 60 \times 40.96 \; ks/s = 2.4576 \; Mc/s$
$R_{ss} = 1/T_{ss} = 40.96 \; ks/s$

## FIG. 8

## FIG. 9

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | ... | 59 |
|---|---|---|---|---|---|---|---|---|---|---|----|----|----|----|----|----|----|----|----|----|----|----|----|----|----|----|----|-----|----|
| 0 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | ... | 1 |
| 1 | 1 | 1 | 0 | 1 | 1 | 1 | 0 | 1 | 0 | 1 | 0 | 1 | 1 | 0 | 0 | 1 | 1 | 1 | 0 | 1 | 1 | 1 | 1 | 0 | 0 | 1 | 1 | ... | 0 |
| 2 | 1 | 0 | 1 | 1 | 1 | 0 | 1 | 0 | 1 | 0 | 0 | 1 | 0 | 0 | 1 | 1 | 1 | 1 | 0 | 1 | 1 | 1 | 1 | 0 | 0 | 1 | 1 | ... | 1 |
| 3 | 1 | 1 | 1 | 1 | 0 | 1 | 0 | 1 | 0 | 0 | 1 | 0 | 0 | 1 | 1 | 1 | 0 | 1 | 1 | 1 | 1 | 0 | 0 | 1 | 1 | 1 | 1 | ... | 0 |
| 4 | 1 | 1 | 1 | 0 | 1 | 0 | 1 | 0 | 0 | 1 | 0 | 0 | 1 | 1 | 1 | 0 | 1 | 1 | 1 | 1 | 0 | 0 | 1 | 1 | 1 | 1 | 1 | ... | 1 |
| 5 | 1 | 1 | 0 | 1 | 0 | 1 | 0 | 0 | 1 | 0 | 0 | 1 | 1 | 1 | 0 | 1 | 1 | 1 | 1 | 0 | 0 | 1 | 1 | 1 | 1 | 1 | 0 | ... | 1 |
| 6 | 1 | 0 | 1 | 0 | 1 | 0 | 0 | 1 | 0 | 0 | 1 | 1 | 1 | 0 | 1 | 1 | 1 | 1 | 0 | 0 | 1 | 1 | 1 | 1 | 1 | 0 | 0 | ... | 1 |
| 7 | 1 | 1 | 0 | 1 | 0 | 0 | 1 | 0 | 0 | 1 | 1 | 1 | 0 | 1 | 1 | 1 | 1 | 0 | 0 | 1 | 1 | 1 | 1 | 1 | 0 | 0 | 0 | ... | 0 |
| 8 | 1 | 0 | 1 | 0 | 0 | 1 | 0 | 0 | 1 | 1 | 1 | 0 | 1 | 1 | 1 | 1 | 0 | 0 | 1 | 1 | 1 | 1 | 1 | 0 | 0 | 0 | 0 | ... | 1 |
| 9 | 1 | 1 | 0 | 0 | 1 | 0 | 0 | 1 | 1 | 1 | 0 | 1 | 1 | 1 | 1 | 0 | 0 | 1 | 1 | 1 | 1 | 1 | 0 | 0 | 0 | 0 | 0 | ... | 0 |
| 10 | 1 | 0 | 0 | 1 | 0 | 0 | 1 | 1 | 1 | 0 | 1 | 1 | 1 | 1 | 0 | 0 | 1 | 1 | 1 | 1 | 1 | 0 | 0 | 0 | 0 | 0 | 1 | ... | 1 |
| 11 | 1 | 0 | 1 | 0 | 0 | 1 | 1 | 1 | 0 | 1 | 1 | 1 | 1 | 0 | 0 | 1 | 1 | 1 | 1 | 1 | 0 | 0 | 0 | 0 | 0 | 1 | 1 | ... | 0 |
| 12 | 1 | 1 | 0 | 0 | 1 | 1 | 1 | 1 | 0 | 1 | 1 | 1 | 1 | 0 | 0 | 1 | 1 | 1 | 1 | 1 | 0 | 0 | 0 | 0 | 0 | 1 | 1 | ... | 0 |
| 13 | 1 | 0 | 0 | 1 | 1 | 1 | 0 | 1 | 1 | 1 | 1 | 0 | 0 | 1 | 1 | 1 | 1 | 1 | 0 | 0 | 0 | 0 | 0 | 1 | 1 | 0 | 0 | ... | 1 |
| 14 | 1 | 0 | 1 | 1 | 1 | 0 | 1 | 1 | 1 | 1 | 0 | 0 | 1 | 1 | 1 | 1 | 1 | 0 | 0 | 0 | 0 | 0 | 1 | 1 | 0 | 0 | 0 | ... | 0 |
| 15 | 1 | 1 | 1 | 1 | 0 | 1 | 1 | 1 | 1 | 0 | 0 | 1 | 1 | 1 | 1 | 1 | 0 | 0 | 0 | 0 | 0 | 1 | 1 | 0 | 0 | 0 | 0 | ... | 0 |
| 16 | 1 | 1 | 1 | 0 | 1 | 1 | 1 | 1 | 0 | 0 | 1 | 1 | 1 | 1 | 1 | 0 | 0 | 0 | 0 | 0 | 1 | 1 | 0 | 0 | 0 | 0 | 1 | ... | 1 |
| 17 | 1 | 1 | 0 | 1 | 1 | 1 | 1 | 0 | 0 | 1 | 1 | 1 | 1 | 1 | 0 | 0 | 0 | 0 | 0 | 0 | 1 | 1 | 0 | 0 | 0 | 0 | 1 | ... | 1 |
| 18 | 1 | 0 | 1 | 1 | 1 | 1 | 0 | 0 | 1 | 1 | 1 | 1 | 1 | 0 | 0 | 0 | 0 | 0 | 1 | 1 | 0 | 0 | 0 | 0 | 1 | 0 | 0 | ... | 1 |
| 19 | 1 | 1 | 1 | 1 | 1 | 0 | 0 | 1 | 1 | 1 | 1 | 1 | 0 | 0 | 0 | 0 | 0 | 1 | 1 | 0 | 0 | 0 | 0 | 1 | 0 | 0 | 0 | ... | 0 |
| 20 | 1 | 1 | 1 | 1 | 0 | 0 | 1 | 1 | 1 | 1 | 1 | 0 | 0 | 0 | 0 | 0 | 1 | 1 | 0 | 0 | 0 | 0 | 1 | 0 | 0 | 0 | 1 | ... | 1 |
| 21 | 1 | 1 | 1 | 0 | 0 | 1 | 1 | 1 | 1 | 1 | 0 | 0 | 0 | 0 | 0 | 1 | 1 | 0 | 0 | 0 | 0 | 1 | 0 | 0 | 0 | 1 | 1 | ... | 1 |
| 22 | 1 | 1 | 0 | 0 | 1 | 1 | 1 | 1 | 1 | 0 | 0 | 0 | 0 | 0 | 1 | 1 | 0 | 0 | 0 | 0 | 1 | 0 | 0 | 0 | 1 | 1 | 0 | ... | 1 |
| 23 | 1 | 0 | 0 | 1 | 1 | 1 | 1 | 1 | 0 | 0 | 0 | 0 | 0 | 1 | 1 | 0 | 0 | 0 | 0 | 1 | 0 | 0 | 0 | 1 | 1 | 0 | 1 | ... | 1 |
| 24 | 1 | 0 | 1 | 1 | 1 | 1 | 1 | 0 | 0 | 0 | 0 | 0 | 1 | 1 | 0 | 0 | 0 | 0 | 1 | 0 | 0 | 0 | 1 | 1 | 0 | 1 | 1 | ... | 0 |
| 25 | 1 | 1 | 1 | 1 | 1 | 1 | 0 | 0 | 0 | 0 | 0 | 1 | 1 | 0 | 0 | 0 | 0 | 1 | 0 | 0 | 0 | 1 | 1 | 0 | 1 | 1 | 0 | ... | 0 |
| 26 | 1 | 1 | 1 | 1 | 1 | 0 | 0 | 0 | 0 | 0 | 1 | 1 | 0 | 0 | 0 | 0 | 1 | 0 | 0 | 0 | 1 | 1 | 0 | 1 | 1 | 0 | 1 | ... | 1 |
| 27 | 1 | 1 | 1 | 1 | 0 | 0 | 0 | 0 | 0 | 1 | 1 | 0 | 0 | 0 | 0 | 1 | 0 | 0 | 0 | 1 | 1 | 0 | 1 | 1 | 0 | 1 | 0 | ... | 1 |
| 28 | 1 | 1 | 1 | 0 | 0 | 0 | 0 | 0 | 1 | 1 | 0 | 0 | 0 | 0 | 1 | 0 | 0 | 0 | 1 | 1 | 0 | 1 | 1 | 0 | 1 | 0 | 1 | ... | 1 |
| 29 | 1 | 1 | 0 | 0 | 0 | 0 | 0 | 1 | 1 | 0 | 0 | 0 | 0 | 1 | 0 | 0 | 0 | 1 | 1 | 0 | 1 | 1 | 0 | 1 | 0 | 1 | 0 | ... | 1 |
| 30 | 1 | 0 | 0 | 0 | 0 | 0 | 1 | 1 | 0 | 0 | 0 | 0 | 1 | 0 | 0 | 0 | 1 | 1 | 0 | 1 | 1 | 0 | 1 | 0 | 1 | 0 | 0 | ... | 1 |
| 31 | 1 | 0 | 0 | 0 | 0 | 1 | 1 | 0 | 0 | 0 | 0 | 1 | 0 | 0 | 0 | 1 | 1 | 0 | 1 | 1 | 0 | 1 | 0 | 1 | 0 | 0 | 0 | ... | 0 |
| ⋮ | | | | | | | | | | | | | | | | | | | | | | | | | | | | | |
| 59 | 1 | 0 | 1 | 0 | 1 | 1 | 1 | 0 | 1 | 0 | 1 | 0 | 0 | 1 | 0 | 0 | 1 | 0 | 0 | 1 | 1 | 1 | 0 | 1 | 1 | 1 | 1 | ... | 0 |

## FIG. 10

20 $LOG_{10}|s(f)|$, (dB)

$\delta_1$ 0

$\delta_2$

FREQUENCY (Hz)

0    $f_p$  $f_w$  $f_s$

$f_p$=4.13952 MHz,  $f_w$=4.9152 MHz,  $f_s$=5.65248 MHz

$\delta_1$=1 dB,  $\delta_2$=-60dB

## FIG. 11

421

cos (2xf, 1)

~1111

$\pi/2$ ~1107

sin (2xf, 1)

1103 → LPF 1113 → A/D 1117 → FIR 1121 → 1133

1105 → LPF 1115 → A/D 1119 → FIR 1123 → 1135

1118 DESPREADER

a = cosφ; 1133

b = sinφ; 1135

FIG. 12

17

# FIG. 13

# FIG. 14

## FIG. 15

R (kb/s) → [ADD CRC AND FRAME TAIL BITE] 151/153 → $R_b$ (kb/s) → [OUTER ENCODER RS (x, y)] 155 → $R_S$ (ks/s) → [INNER-ENCODER TURBO RATE k/s] 157 → $R_{SS}$ (ks/s) → [SPREADER] 159 → $R_c$ Mc/s → [M-PSK] 161 → RF 163

## FIG. 16

## FIG. 17

$T_{c2}$

| 1 | 2 | $\leftarrow T_{c1} = 2 \times T_{c2}$

| 1 | 2 | $\cdots$ | 60 |

$T_{20} = 60 \times T_{c1}$

$L_1 = 60, \ L_2 = 2$
$R_{c2} = 4 \times 4.9152 \ Mc/s = 9.8304 \ Mc/s$
$R_{c1} = 60 \times 81.92 \ ks/s = 4.9152 \ Mc/s$
$R_{ss} = 1/T_{ss} = 81.92 \ ks/s$

## FIG. 18

$W_i.W_i \ \ i = 1.2$ CROSS POLARIZATION ISOLATION
$W_1'.W_2'$ ORITHOGONAL BEAMS

## FIG. 19

$\varphi_j$

271

$\varphi_d$ — 273

278

$\hat{\varphi}_r$

PHASE CORRECTION → $\varphi_{est}$

$\varphi_k$

275

## FIG. 20